# EUROPEAN PATENT APPLICATION

(11) **EP 4 628 260 A1**
(43) Date of publication of application: **08.10.2025**
(21) Application number: 23897122.0
(22) Date of filing: 24.07.2023
(51) Int. Cl.: B25J 3/00, B25J 19/00

(54) **REMOTE WORK SUPPORT SYSTEM**

(30) Priority: 28.11.2022 JP 2022189226
(71) Applicant: Sumitomo Heavy Industries, Ltd., Tokyo 141-6025 (JP)
(72) Inventor: NAGATOMO Yuji, Yokosuka-shi, Kanagawa 237-8555 (JP)
(74) Representative: Louis Pöhlau Lohrentz
(86) International application number: PCT/JP2023/026972
(87) International publication number: WO 2024/116462

(57) **Abstract**

A worker operates an operation robot and a work robot operates in a cooperative manner in response to an operation of the operation robot to perform work. A sound collector collects sounds generated during the work performed by the work robot. A sound generator generates sounds to allow the worker who operates the operation robot to listen to the sounds. A control device extracts a sound having a specific frequency range from the sounds collected by the sound collector and causes the sound generator to output the extracted sound. The control device has a function to determine the specific frequency range.

## Description

### Technical Field

The present invention relates to a remote work support system.

### Background Art

A remote operation robot that can perform work from a remote location is publicly known. For example, a remote operation robot in which a worker operates a leader robot and causes a follower robot provided at a remote location to operate in a cooperative manner to perform work is publicly known. The amount of information to be obtained in work using the remote operation robot is smaller than that in a case where work is directly performed on an object. For this reason, the machining accuracy or work efficiency is likely to be lowered in work using the remote operation robot.

A robot system in which an acceleration sensor is attached to a robot hand provided at a remote location and an acceleration signal from the acceleration sensor is output from a speaker as perceptual information is publicly known (Japanese Unexamined Patent Publication No. 2018-192593).

### Citation List

### Patent Literature

[PTL 1] Japanese Unexamined Patent Publication No. 2018-192593

### Summary of Invention

### Technical Problem

An object of the present invention is to provide a remote work support system that can supplement a shortage of information in a case where work is performed remotely using a remote work robot.

### Solution to Problem

According to an aspect of the present invention, there is provided a remote work support system that supports work using a remote operation robot in which a worker operates an operation robot and a work robot operates in a cooperative manner in response to an operation of the operation robot to perform work. The system includes a sound collector that collects sounds generated during the work performed by the work robot, a sound generator that generates sounds to allow the worker who operates the operation robot to listen to the sounds, and a control device that extracts a sound having a specific frequency range from the sounds collected by the sound collector and causes the sound generator to output the extracted sound. The control device has a function to determine the specific frequency range.

### Advantageous Effects of Invention

A worker can listen to sounds generated during work through the sound collector and the sound generator. Since the control device causes the sound generator to output a sound having a specific frequency range specified by the worker, the worker can listen to a sound having a specific frequency among sounds generated during the work. The sound having the specific frequency is information useful for the work.

### Brief Description of Drawings

Fig. 1 is a schematic diagram of a remote work support point system according to the present embodiment and a remote operation robot that is an object to be supported by the remote work support system.
Fig. 2 is a flowchart showing a procedure for setting filtering characteristics of a sound editor.
Fig. 3 is a flowchart showing a detailed procedure of Step S2 shown in Fig. 2.
Fig. 4A is a graph showing an example of a waveform of sounds generated during work of a follower robot, Fig. 4B is a graph showing an example of results of the spectral analysis of the waveform of the sounds, and Fig. 4C is a diagram showing an example of an image, which is displayed on an output device by a control device, and a sound generator.
Fig. 5 is a schematic cross-sectional view of a machine tool attached to a tip of the follower robot and a workpiece in a case where work supported by a remote work support system according to another embodiment is performed.
Fig. 6 is a flowchart showing a procedure of Step S2 (Fig. 2) that is executed by a control device of the remote work support system according to the embodiment shown in Fig. 5.
Figs. 7A and 7B are graphs showing results of the spectral analysis of sounds obtained in the embodiment shown in Fig. 5 and results of the spectral analysis of a waveform of a temporal change in force.

### Description of Embodiments

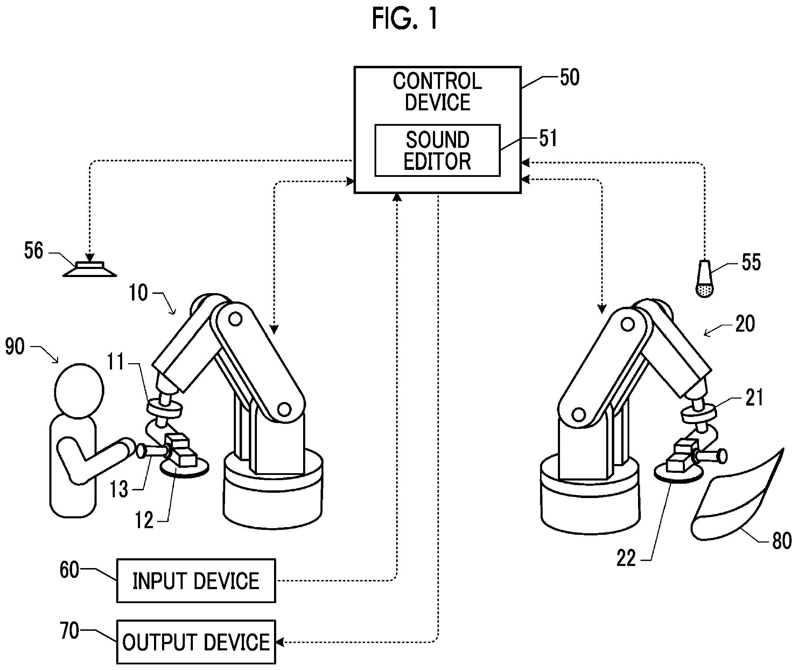

A remote work system according to an embodiment will be described with reference to Figs. 1 to 4C.

Fig. 1 is a schematic diagram of a remote work support point system according to the present embodiment and a remote operation robot that is an object to be supported by the remote work support system.

The remote operation robot includes a leader robot 10 (operation robot), a follower robot 20 (work robot), a control device 50, an input device 60, and an output device 70. The leader robot 10 and the follower robot 20 include, for example, articulated robot arms. Machine tools 12 and 22 are attached to tips of the leader robot 10 and the follower robot 20, respectively. An operation handle 13 is further attached to the tip of the leader robot 10.

In a case where a worker 90 grips the operation handle 13 to move the leader robot 10, the follower robot 20 operates in a cooperative manner under the control of the control device 50. That is, the follower robot 20 performs the same operation as the leader robot 10. In a case where the follower robot 20 operates, the machine tool 22 attached to the tip of the follower robot 20 acts on a workpiece 80. For example, the machine tool 22 is a polishing device and the follower robot 20 operates in a cooperative manner, so that polishing is performed on the workpiece 80. The workpiece 80 may be held at the tip of the follower robot 20, and the position of the workpiece 80 may be changed with respect to the fixed machine tool 22. Further, the machine tool 12 does not necessarily need to be attached to the tip of the leader robot 10.

A force sensor 11 is attached to correspond to each shaft of the leader robot 10. The force sensor 11 measures a force acting on each shaft of the leader robot 10. Measurement results of the force sensors 11 are taken into the control device 50. Similarly, a force sensor 21 is attached to even the follower robot 20 to correspond to each shaft. The force sensor 21 measures a force acting on each shaft of the follower robot 20. Measurement results of the force sensors 21 are taken into the control device 50. In Fig. 1, one of the plurality of force sensors 11 and one of the plurality of force sensors 21 are shown as representatives.

The worker 90 operates the input device 60 to give various commands to the control device 50. Various types of information to be notified to the worker 90 are output to the output device 70. For example, various rotary volumes, keyboards, pointing devices, and the like are used as the input device 60. For example, a display device including a display screen is used as the output device 70. Further, a touch panel may also be used as the input device 60 and the output device 70.

The remote work support system according to the present embodiment includes a sound collector 55, a sound generator 56, the control device 50, the input device 60, and the output device 70. The control device 50, the input device 60, and the output device 70 are shared by the remote operation robot and the work support system.

The sound collector 55, for example, a microphone converts sounds, which are generated in a case where the follower robot 20 performs work on the workpiece 80 by performing an emphasis operation, into electric signals, and generates sound data. The sound data generated by the sound collector 55 is taken into the control device 50. In the present specification, "sound data" may be simply referred to as "sounds".

The sound generator 56, for example, a speaker receives the sound data output from the control device 50 and generates sounds. The sound generator 56 is disposed at a position where the worker 90 operating the leader robot 10 can listen to the generated sounds.

The control device 50 includes a sound editor 51. The sound editor 51 processes the sounds acquired from the sound collector 55, and causes the sound generator 56 to output the processed sounds in real time. The sound editor 51 performs, for example, filtering for emphasizing a sound having a specific frequency range and attenuating sounds having other frequency ranges. For example, the sound editor 51 emphasizes a useful sound and suppresses other sounds to improve the accuracy or the efficiency of the work.

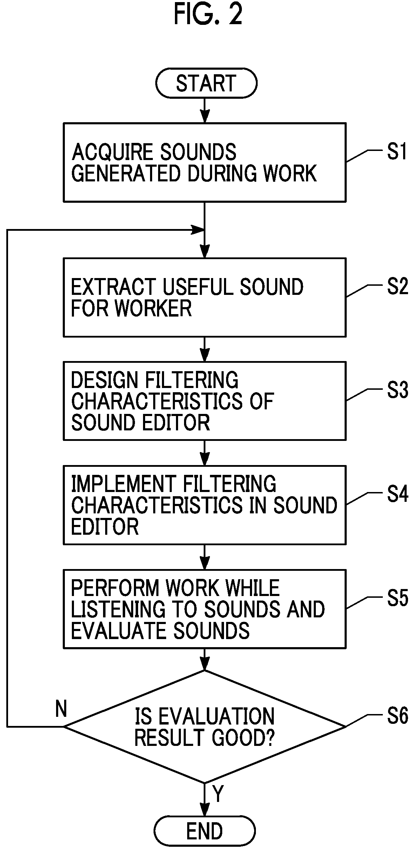

Next, a method of setting filtering characteristics of the sound editor 51 will be described with reference to Fig. 2. Fig. 2 is a flowchart showing a procedure for setting the filtering characteristics of the sound editor 51.

The control device 50 acquires sounds, which are generated during the work performed by the follower robot 20, from the sound collector 55 (Step S1). A useful sound for the worker 90 (Fig. 1) operating the leader robot 10 is extracted from the acquired sounds (Step S2). For example, this extraction work is performed by the worker 90. Here, the "useful sound" means a sound that helps to improve the accuracy or the efficiency of the work in a case where the worker 90 listens to the sound.

The filtering characteristics of the sound editor 51 are designed based on a frequency range of the useful sound (Step S3). Then, the designed filtering characteristics are implemented in the sound editor 51 (Step S4). The design and implementation of the filtering characteristics are performed by the worker 90 or the control device 50, based on information of the useful sound extracted in step S2.

The worker 90 operates the sound editor 51 in which the filtering characteristics are implemented, performs work for machining the workpiece 80 while listening to the sounds output from the sound generator 56, and evaluates whether or not the filtering characteristics are appropriate (Step S5). In a case where the sounds output from the sound generator 56 are useful to improve machining accuracy or to improve the streamlining of the work, the filtering characteristics are evaluated to be appropriate. The procedure from Step S2 to Step S5 is repeated until the filtering characteristics are evaluated to be appropriate (Step S6).

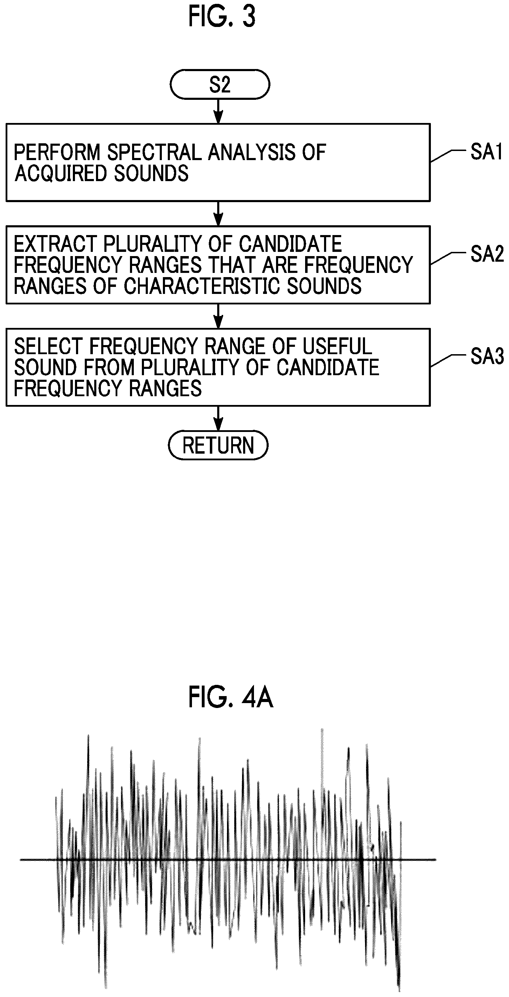

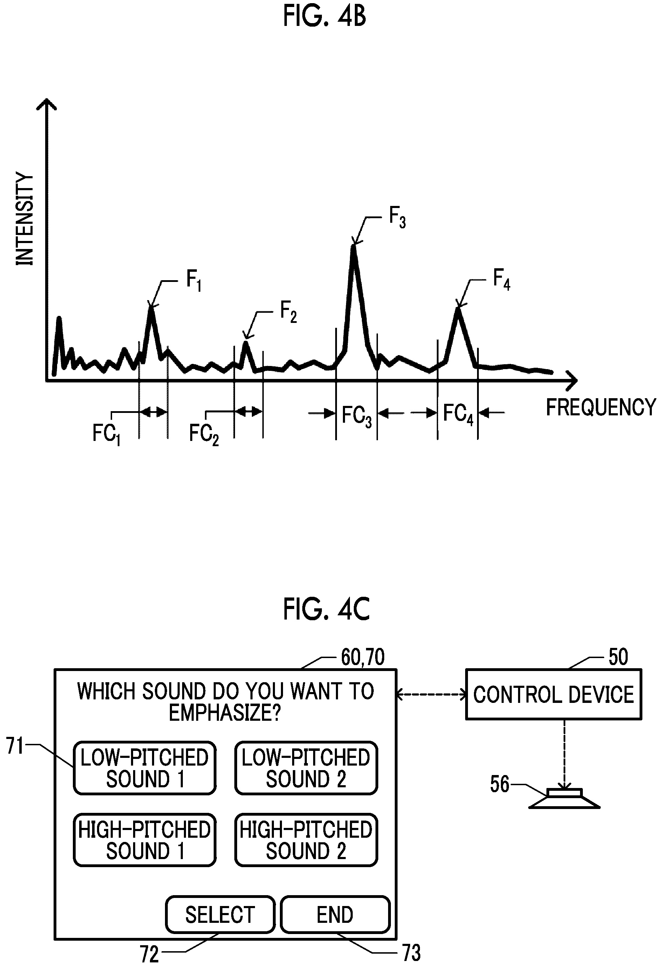

Next, a procedure of Step S2 shown in Fig. 2 will be described in more detail with reference to Figs. 3, 4A, 4B, and 4C. Fig. 3 is a flowchart showing a detailed procedure of Step S2. Fig. 4A is a graph showing an example of a waveform of sounds generated during the work of the follower robot 20, and Fig. 4B is a graph showing an example of results of the spectral analysis of the waveform of the sounds. A horizontal axis of Fig. 4B represents a frequency, and a vertical axis represents intensity.

The control device 50 performs the spectral analysis of the sounds that are acquired by the sound collector 55 (Fig. 1) during the work of the follower robot 20 (Step SA1). For example, the control device 50 performs the spectral analysis of the waveform of the sounds shown in Fig. 4A. A frequency spectrum (Fig. 4B) is obtained through the spectral analysis. For example, peaks of the spectrum appear at the positions of frequencies F₁, F₂, F₃, and F₄. Frequency ranges in which the peaks of the spectrum appear can be referred to as frequency ranges of characteristic sounds.

The control device 50 extracts frequency ranges of characteristic sounds from the frequency spectrum of the sounds (Fig. 4B) as candidate frequency ranges (Step SA2). In the example shown in Fig. 4B, four frequency ranges including the respective frequencies F₁, F₂, F₃, and F₄ are extracted as candidate frequency ranges FC₁, FC₂, FC₃, and FC₄. The control device 50 prompts the worker 90 to select a candidate frequency range, which includes the useful sound, from the four candidate frequency ranges FC₁, FC₂, FC₃, and FC₄ (Step SA3).

A detailed procedure of Step SA3 will be described with reference to Fig. 4C. Fig. 4C is a diagram showing an example of an image, which is displayed on the output device 70 (touch panel) by the control device 50, and the sound generator 56.

The control device 50 displays buttons 71 corresponding to the four respective candidate frequency ranges FC₁, FC₂, FC₃, and FC₄ on the touch panel, and displays a selection button 72 and an end button 73. For example, character strings "low-pitched sound 1", "low-pitched sound 2", "high-pitched sound 1", and "high-pitched sound 2" are given to the buttons 71 corresponding to the candidate frequency ranges FC₁, FC₂, FC₃, and FC₄, respectively, so that a correspondence relationship between the buttons 71 and the candidate frequency ranges is clarified.

In a case where the worker 90 (Fig. 1) taps any of the buttons 71 to select one of the plurality of candidate frequency ranges, the control device 50 outputs a sound having the selected candidate frequency range from the sound generator 56. The worker listens to the sound output from the sound generator 56 to determine whether or not the sound is useful. For example, it is considered that a sound of which the volume or pitch fluctuates depending on the progress of the work is a useful sound. It is considered that a sound hardly changing even in a case where the work progresses is not a useful sound. In a case where the sound is a useful sound, the worker 90 taps the selection button 72. In a case where the selection button 72 is tapped, the control device 50 selects the candidate frequency range, which corresponds to the sound currently being output, as one of frequency ranges of useful sounds.

In a case where the worker 90 finishes listening to all the sounds having the candidate frequency ranges, the worker 90 taps the end button 73. In a case where the end button 73 is tapped, the control device 50 stores the frequency range selected as the frequency range of the useful sound and ends the processing of Step SA3.

Next, excellent effects of the present embodiment will be described.

In the present embodiment, the worker 90 can perform the work while listening to the sounds generated during the work. Further, since a useful sound among the sounds generated during the work is emphasized and the other sounds are removed or reduced, work efficiency can be further improved. For example, the sound of rotation of a motor and the like can be removed, and a useful sound can be emphasized. Accordingly, it is easy to notice a change in the useful sound.

For example, in a case where work of polishing a plate-like workpiece 80 having a non-uniform thickness is performed, the pitch of a polishing sound varies depending on a position where the machine tool 22 (Fig. 1) is in contact with the workpiece. For example, the pitch of a polishing sound is raised as the thickness of a portion on which polishing is performed is reduced. Further, the pitch of a polishing sound also varies depending on a distance between a portion of which the workpiece 80 is fixed and a portion on which polishing is performed. A change in the pitch of the polishing sound is information useful to find out a portion of the workpiece 80 on which polishing is currently performed.

In order to select a polishing sound of which the pitch changes during the polishing as a useful sound, it is preferable to acquire all sounds generated from the start to the end of the polishing in Step S1 (Fig. 2). Further, in Step SA1 (Fig. 3), it is preferable to perform a spectral analysis on the sounds generated from the start to the end of the polishing. In this case, broad peaks covering frequency ranges in which the pitch of a polishing sound changes appears in the spectrum shown in Fig. 4B. The candidate frequency ranges may be extracted to include the broad peaks.

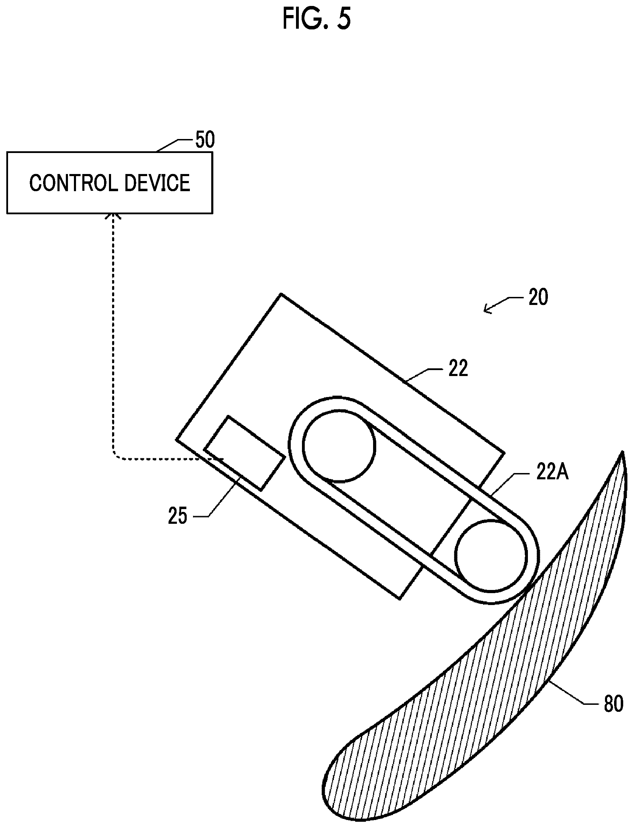

Next, a remote work support system according to another embodiment will be described with reference to Figs. 5 to 7. Hereinafter, the description of the configuration common to the remote work support system according to the embodiment described with reference to Figs. 1 to 4 will be omitted.

Fig. 5 is a schematic cross-sectional view of a machine tool 22 attached to a tip of a follower robot 20 and a workpiece 80 in a case where work supported by the remote work support system according to the present embodiment is performed. The machine tool 22 includes a polishing belt 22A and causes the rotating polishing belt 22A to be in contact with the workpiece 80, so that polishing work is performed. A force sensor 25 measures a reaction force that is applied to the polishing belt 22A from the workpiece 80. A measurement result of the force sensor 25 is taken into the control device 50.

In the present embodiment, a procedure (Step S2 in Fig. 2) of extracting a useful sound for a worker is different from the procedure shown in Fig. 3.

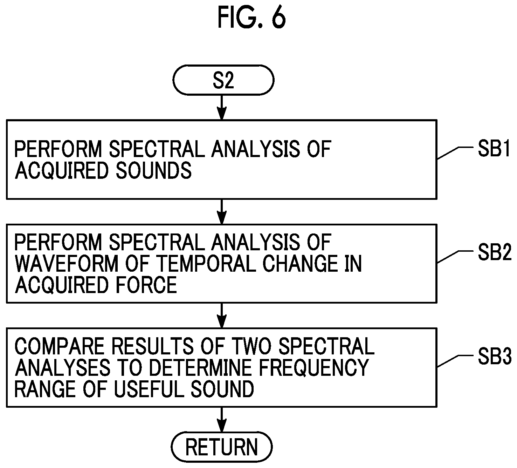

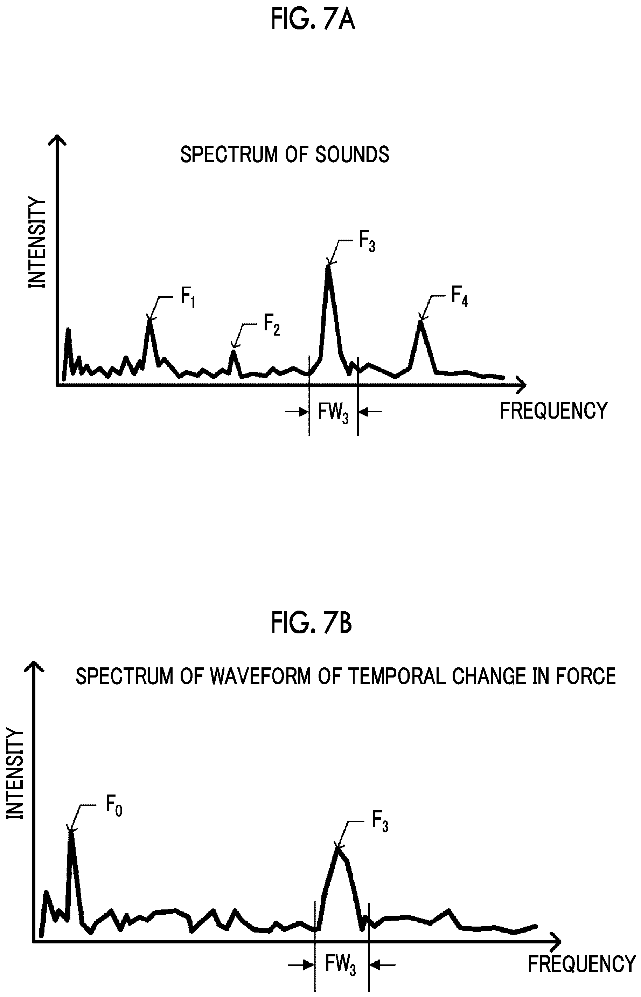

Fig. 6 is a flowchart showing a procedure of Step S2 (Fig. 2) that is executed by a control device 50 of the remote work support system according to the present embodiment. Figs. 7A and 7B are graphs showing results of the spectral analysis of sounds obtained in the present embodiment and results of the spectral analysis of a waveform of a temporal change in force. In the embodiment shown in Fig. 2, sounds generated during the work are acquired from the sound collector 55 (Fig. 1) in Step S1. However, in the present embodiment, the magnitude of a force that changes with time during the work is acquired from the force sensor 25 (Fig. 5) in addition to the sounds.

The control device 50 performs the spectral analysis of the sounds acquired in Step S1 (Fig. 2) as in Step SA1 (Fig. 3) (Step SB1). An example of results of the spectral analysis is shown in Fig. 7A. A spectrum shown in Fig. 7A is the same as the spectrum shown in Fig. 4B. Further, the control device 50 performs the spectral analysis of a waveform of a temporal change in a force that is acquired during the work (Step SB2). An example of results of the spectral analysis is shown in Fig. 7B.

The control device 50 compares the results of the two spectral analyses to determine the frequency range of a useful sound for the work (Step SB3). For example, the control device 50 detects peaks that appear in both of the two spectra in common. For example, peaks appear at the positions of frequencies F₁, F₂, F₃, and F₄, in the spectrum of the sounds (Fig. 7A), and peaks appear at the positions of frequencies F₀ and F₃ in the spectrum of the waveform of a temporal change in force (Fig. 7B). Peaks appear only in one spectrum at the positions of the frequencies F₀, F₁, F₂, and F₄. A frequency range FW₃ including the frequency F₃ at which a peak appears in both of the two spectra is determined as the frequency range of the useful sound.

In the polishing work, a force applied to each other between the workpiece 80 and the machine tool 22 greatly affects the finishing accuracy of a polished surface. For this reason, a sound having a frequency range, which includes the same frequency as the frequency of a peak appearing in the spectrum of the waveform of a temporal change in force, can be considered as a useful sound.

Next, excellent effects of the present embodiment will be described.

In the present embodiment, the worker 90 does not actually listen to the acquired sound and does not determine whether or not the sound is useful, and the control device 50 determines the frequency range of the useful sound.

Therefore, it is possible to determine the frequency range of the useful sound without depending on the degree of proficiency or the skill of the worker 90.

Each of the above-described embodiments is an example, and it goes without saying that configurations shown in other embodiments can be partially substituted or combined. The same effects as those of the plurality of embodiments having the same configuration will not be repeatedly described for each embodiment. In addition, the present invention is not limited to the above-described embodiments. It will be apparent to those skilled in the art that, for example, various modifications, improvements, combinations, and the like can be made.

### Reference Signs List

- 10: leader robot
- 11: force sensor
- 12: machine tool
- 13: operation handle
- 20: follower robot
- 21: force sensor
- 22: machine tool
- 22A: polishing belt
- 25: force sensor
- 50: control device
- 51: sound editor
- 55: sound collector
- 56: sound generator
- 60: input device
- 70: output device
- 71: button corresponding to candidate frequency range
- 72: select button
- 73: end button
- 80: workpiece

## Claims

1. A remote work support system that supports work using a remote operation robot in which a worker operates an operation robot and a work robot operates in a cooperative manner in response to an operation of the operation robot to perform work, the system comprising:
a sound collector that collects sounds generated during the work performed by the work robot;
a sound generator that generates sounds to allow the worker who operates the operation robot to listen to the sounds; and
a control device that extracts a sound having a specific frequency range from the sounds collected by the sound collector and causes the sound generator to output the extracted sound,
wherein the control device has a function to determine the specific frequency range.

2. The remote work support system according to claim 1,
wherein the control device
performs a spectral analysis of the sounds collected by the sound collector,
extracts a plurality of candidate frequency ranges, which are frequency ranges of characteristic sounds, based on results of the spectral analysis,
outputs respective sounds having the plurality of candidate frequency ranges,
causes the worker who has listened to the output sounds to select at least one candidate frequency range from the plurality of candidate frequency ranges, and
determines the candidate frequency range, which is selected by the worker, as the specific frequency range.

3. The remote work support system according to claim 1,
wherein the work performed by the work robot is work that is performed in a state where a machine tool is in contact with a workpiece,
the remote work support system further comprises a force sensor that measures a temporal change in a force with which the machine tool is in contact with the workpiece, and
the control device
performs a spectral analysis of the sounds collected by the sound collector,
performs a spectral analysis of a waveform of the temporal change in the force measured by the force sensor, and
determines the specific frequency range by comparing results of the spectral analysis of the sounds with results of the spectral analysis of the waveform of the temporal change in the force.
